# EUROPEAN PATENT APPLICATION

(11) **EP 2 233 968 A1**
(43) Date of publication of application: **29.09.2010**
(21) Application number: 09252609.4
(22) Date of filing: 13.11.2009
(51) Int. Cl.: G02F 1/13357, G02B 6/00

(54) **Hybrid backlight assembly using lens-shaped light guides**

(30) Priority: 26.03.2009 JP 2009076264
(71) Applicant: Hitachi Consumer Electronics Co. Ltd., Tokyo 100-0004 (JP)
(72) Inventor: Kubota, Hidenao, Tokyo 100-8220 (JP); Murata, Seiji, Tokyo 100-8220 (JP); Ouchi, Satoshi, Tokyo 100-8220 (JP); Yamashita, Yoshiharu, Tokyo 100-8220 (JP); Masuoka, Nobuo, Tokyo 100-8220 (JP)
(74) Representative: Hackney, Nigel John

(57) **Abstract**

In a liquid crystal display device having a direct-lighting backlight using LEDs as a light source, the number of LEDs is reduced without causing unevenness in brightness. An LED is disposed under a cylindrical lens to be closer to one end of the lens than a middle part of the lens. Light emitted from the LED is outputted, as diffused light, upward from an end diffusion surface of the lens. A portion of the top surface of the lens makes up a total reflection surface to reflect light emitted from the LED and thereby cause the reflected light to head for the other end of the lens. Diffusion surfaces formed on the top surface and the bottom surface of the lens radiate diffused light upward of the lens, causing uniform light to be radiated from the whole top surface of the lens.

## Description

The present invention relates to a liquid crystal display (LCD) device with a backlight using LEDs, and more particularly, to an LCD device with a backlight which can keep the screen brightness uniform while using fewer LEDs than before.

LCD devices which have been in use each include a thin-film transistor (TFT) substrate on which pixel electrodes and TFTs are arranged in a matrix, a counter substrate which is disposed to oppose the TFT substrate and on which color filters are formed in positions corresponding to the pixel electrodes on the TFT substrate, and a liquid crystal layer held between the TFT substrate and the counter substrate. An image to be displayed is formed by controlling the optical transmittance of liquid crystals for each pixel.

Since LCD devices can be made thin and light, they are used in various fields. Since liquid crystals do not emit light themselves, an LCD panel has a backlight disposed behind them. For LCD devices with a relatively large screen, for example, TVs, cold cathode tubes have been used as backlights. Recently, however, backlights using light emitting diodes (LEDs) have come to be used to meet demand for thinner LCD devices or for wider display areas.

Backlights are divided into a direct-lighting type and a side-light type. In an LCD panel using a direct-lighting backlight, light sources are disposed directly behind the display panel. In an LCD panel using a side-light type backlight, light sources are disposed at an edge of the display panel. For an LCD panel requiring improved screen brightness or requiring the screen brightness to be locally controllable according to the image being displayed, a direct-lighting backlight is adopted in many cases. In a direct-lighting backlight using LEDs, many LEDs are disposed behind an LCD panel so as to secure an adequate amount of light with uniform brightness. Using a large number of LEDs poses a problem of heat generation by the LEDs while causing an increase in production cost.

In Japanese Unexamined Patent Application Publication No. 2007-335182, a configuration is disclosed in which optical control members which are sheets each including prism-like parts with semi-circular or triangular sections are provided for a light source including LEDs arranged in a matrix. In the configuration, to achieve brightness uniformity, the function of the optical control members to vary directions in which light advances is used.

The technique disclosed in Japanese Unexamined Patent Application Publication No. 2007-335182 involves the use of a large number of LEDs, so that it cannot solve the problems of heat generation by the backlight and a high cost of LEDs. Furthermore, in the above configuration, the optical control members and the light source including an LED array are not directly put together, so that positioning between them is not easy.

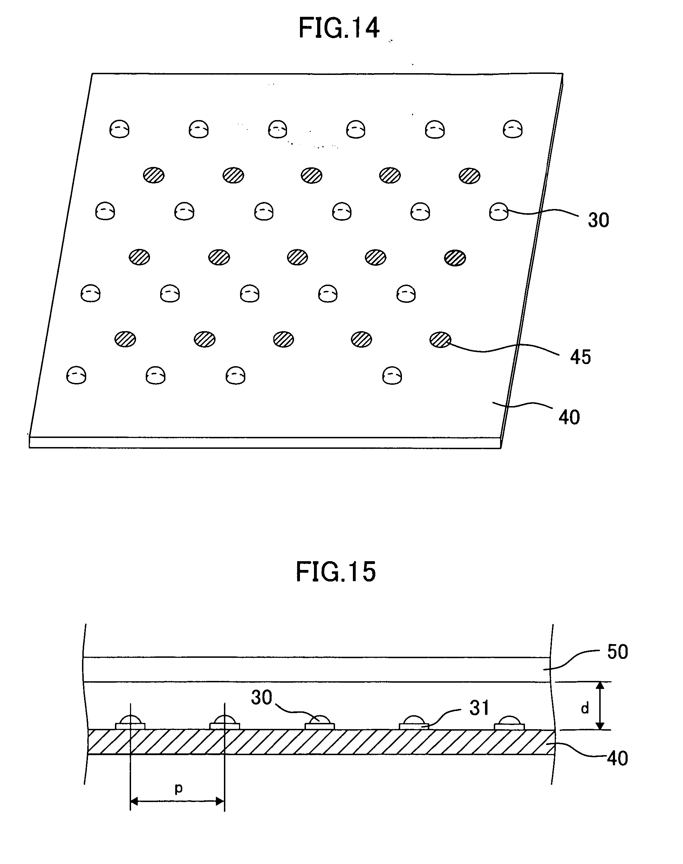

FIG. 14 is a perspective view of a light source including LEDs 30 arranged on an interconnection substrate 40 for a direct-emitting backlight. On the interconnection substrate 40 shown in FIG. 14, LEDs 30 are arranged in four rows by six columns, and wirings for supplying power to the LEDs 30 are formed. The surface of the interconnection substrate 40 makes up a reflection surface.

Referring to FIG. 14, when the number of LEDs 30 is smaller than required, dark portions 45, indicated by hatching, are generated between LEDs 30, resulting uneven screen brightness. Whether or not the dark portions 45 are generated is affected by the distance between the LEDs 30 and a diffusion plate 50 disposed above the LEDs 30. FIG. 15 is a sectional view showing a positional relationship between the interconnection substrate 40 on which the LEDs 30 are formed and the diffusion plate 50.

Whether or not the screen brightness becomes uneven is affected by a pitch p between LEDs 30 and a distance d between the interconnection substrate 40 and the diffusion plate 50. Based on the same value of the pitch p, when the distance d is adequately large, the screen brightness can be kept uniform. When the distance d is smaller than required, the screen brightness becomes uneven.

When the distance d shown in FIG. 15 is halved, it is necessary to also halve the pitch p so as not to make uneven screen brightness conspicuous. Halving the pitch p quadruplicates the number of LEDs 30. This increases the cost of LEDs and makes the problem of heat generation by the LEDs serious.

Recently, with LCD devices required to be thin, problems related with the number of LEDs used in a backlight and color irregularity have been growing more serious. An object of the present invention is to realize a thin LCD panel which can reduce the number of LEDs 30 to be used while keeping the screen brightness uniform.

The present invention has been made in view of the above problems, and preferably the problems are addressed as follows.

In a first aspect, (1) the invention provides a liquid crystal display (LCD) device having an LCD panel and a direct-lighting backlight, wherein: the backlight includes a substrate on which plural LEDs are arranged and a lens disposed for each of the plural LEDs or for each set of a predetermined number of LEDs included in the plural LEDs, the lens having a bottom surface, a top surface, a first end, and a second end; the top surface of the lens includes a first area which totally reflects light coming directly from each of the plural LEDs or each set of the predetermined number of LEDs and a second area which converts light coming directly from each of the plural LEDs or each set of the predetermined number of LEDs into diffused light; the bottom surface of the lens includes a third area which converts incident light into diffused light and a fourth area which totally reflects specific light; and each of the plural LEDs or each set of the predetermined number of LEDs are disposed under the lens to be closer, than a middle part of the lens, to the first end of the lens.

Preferably, (2) the invention provides the LCD device as described in (1) above, wherein the lens is a cylindrical lens having, as viewed sectionally, a linear bottom surface and an arc-like top surface.

Preferably, (3) the invention provides the LCD device as described in (2) above, wherein the top surface of the lens includes a third area and a fourth area which are alternately formed, the third area converting incident light into diffused light, the fourth area totally reflecting specific light.

In a further aspect, (4) the invention provides an LCD device having an LCD panel and a direct-lighting backlight, wherein: the backlight includes a substrate on which plural LEDs are arranged and an integral type lens which includes plural lenses formed for the plural LEDs and which is disposed correspondingly to the substrate, each of the plural LEDs or each set of a predetermined number of LEDs included in the plural LEDs corresponding to one of the plural lenses; the one of the plural lenses has a bottom surface, a top surface, a first end, and a second end; the top surface of the one of the plural lenses includes a first area which totally reflects light coming directly from each of the plural LEDs or each set of the predetermined number of LEDs and a second area which converts light coming directly from each of the plural LEDs or each set of the predetermined number of LEDs into diffused light; the bottom surface of the one of the plural lenses includes a third area which converts incident light into diffused light and a fourth area which totally reflects specific light; and each of the plural LEDs or each set of the predetermined number of LEDs are disposed under the one of the plural lenses to be closer, than a middle part of the lens, to the first end of the lens.

In a further aspect, (5) the invention provides an LCD device having an LCD panel and a direct-lighting backlight, wherein: the backlight includes a substrate on which plural LEDs are arranged and a lens sheet which includes plural lenses formed for the plural LEDs and which is disposed correspondingly to the substrate, each of the plural LEDs corresponding to one of the plural lenses; the one of the plural lenses has a bottom surface, a top surface, a first end, and a second end; the top surface of the one of the plural lenses includes a first area which totally reflects light coming directly from each of the plural LEDs and a second area which converts light coming directly from each of the plural LEDs into diffused light; the bottom surface of the one of the plural lenses includes a third area which converts incident light into diffused light and a fourth area which totally reflects specific light; and each of the plural LEDs is disposed under the one of the plural lenses to be closer, than a middle part of the lens, to the first end of the lens.

Preferably, (6) the invention provides the LCD device as described in (5) above, wherein the lens sheet corresponds to the backlight on a one-for-one basis.

Preferably, according to the present invention, a direct-lighting backlight using LEDs as light sources includes a lens provided for each of the LEDs, so that the light emitted by the LEDs can be widely and uniformly radiated toward an LCD panel. It is therefore possible to realize uniform screen brightness while using fewer LEDs than before resulting in a lower production cost.

Preferably, according to the present invention, the light emitted by the LEDs included in a backlight can be widely and uniformly radiated toward an LCD panel. Therefore, even when using fewer LEDs, the distance between the LEDs and the diffusion plate included in the backlight can be reduced, making it possible to realize a thin LCD device.

### BRIEF DESCRIPTION OF THE DRAWINGS

FIG. 1 is an external view of a liquid crystal display (LCD) device;
FIG. 2 is an exploded sectional view of a first embodiment of the invention;
FIG. 3 is a perspective view of a light source of a backlight;
FIGS. 4A to 4C show a lens for an LED in detail;
FIG. 5 is a sectional view showing a positional relationship between the lens for an LED and a diffusion plate;
FIG. 6 is a sectional view showing optical paths in the vicinity of where an LED is disposed;
FIG. 7 is a sectional view showing optical paths around the center of the lens;
FIG. 8A is a graph showing brightness distribution at the diffusion plate;
FIG. 8B is a sectional view showing optical paths in the lens;
FIGS. 9A and 9B show methods of forming a diffusion surface for a second embodiment of the invention;
FIG. 10 is a perspective view of another type of a lens for the first embodiment;
FIG. 11 is a perspective view of still another type of a lens for the first embodiment;
FIGS. 12A and 12B are perspective views of still another type of a lens for the first embodiment;
FIG. 13 is a perspective view showing a lens array according to a second embodiment of the invention;
FIG. 14 shows an example of a direct-lighting LED backlight according to a prior art; and
FIG. 15 is a sectional view showing a pitch between LEDs used in a prior-art backlight and a distance between the LEDs and a diffusion plate.

### DESCRIPTION OF THE PREFERRED EMBODIMENTS

Embodiments of the present invention will be described in detail below with reference to drawings.

### First Embodiment

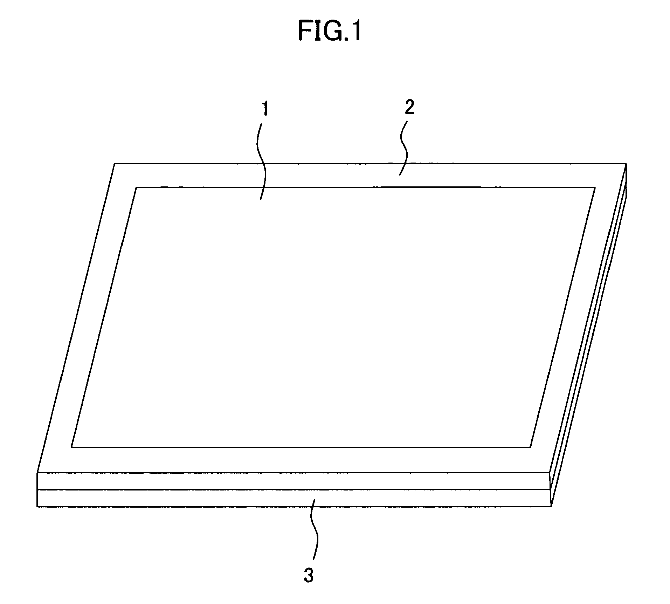

FIG. 1 shows a liquid crystal TV as an application example of the liquid crystal display (LCD) device according to the present invention. As shown in FIG. 1, a frame 2 covers the circumference of an LCD panel, leaving a display screen 1 uncovered. A backlight 3 is disposed on the back of the LCD panel. The backlight 3 shown in FIG. 1 is a direct-lighting backlight.

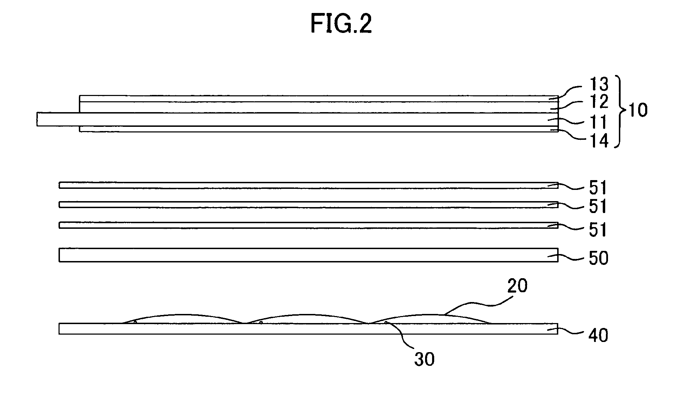

FIG. 2 is an exploded sectional view of an LCD panel 10 and a backlight which are equivalent to the LCD device shown in FIG. 1 without the frame 2. Referring to FIG. 2, a TFT substrate 11 and a counter substrate 12 are bonded together using an adhesive, not shown. On the TFT substrate 11, a display area including TFT transistors and pixel electrodes arranged in a matrix, scanning lines, and video signal lines are formed. On the counter substrate 12, color filters are formed. A liquid crystal layer, not shown, is held between the TFT substrate 11 and the counter substrate 12.

A lower polarizing plate 14 is bonded to the underside of the TFT substrate 11. An upper polarizing plate 13 is bonded to the upper side of the counter substrate 12. The TFT substrate 11, counter substrate 12, lower polarizing plate 14, and upper polarizing plate 13 bonded together make up an LCD panel. A backlight is disposed behind the LCD panel. The backlight has a light source section and various optical parts.

Referring to FIG. 2, the light source section includes an interconnection substrate 40 on which LEDs 30 each covered by a lens 20 are arranged. In the present embodiment, as seen in FIG. 2, three LEDs 30 and three lenses 20 are laterally arranged. Plural LEDs and plural lenses are also arranged in the depth direction, i.e. the direction perpendicular to the plane of the drawing. The light emitted by the LEDs 30 is widely spread by the lenses 20, so that, even when the number of LEDs 30 is small, brightness unevenness can be held lower than a predetermined level.

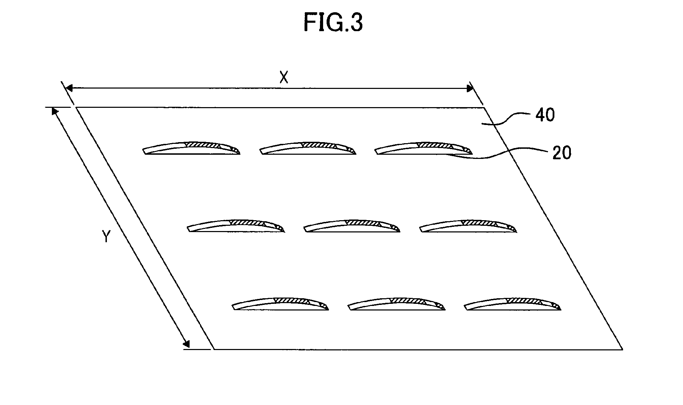

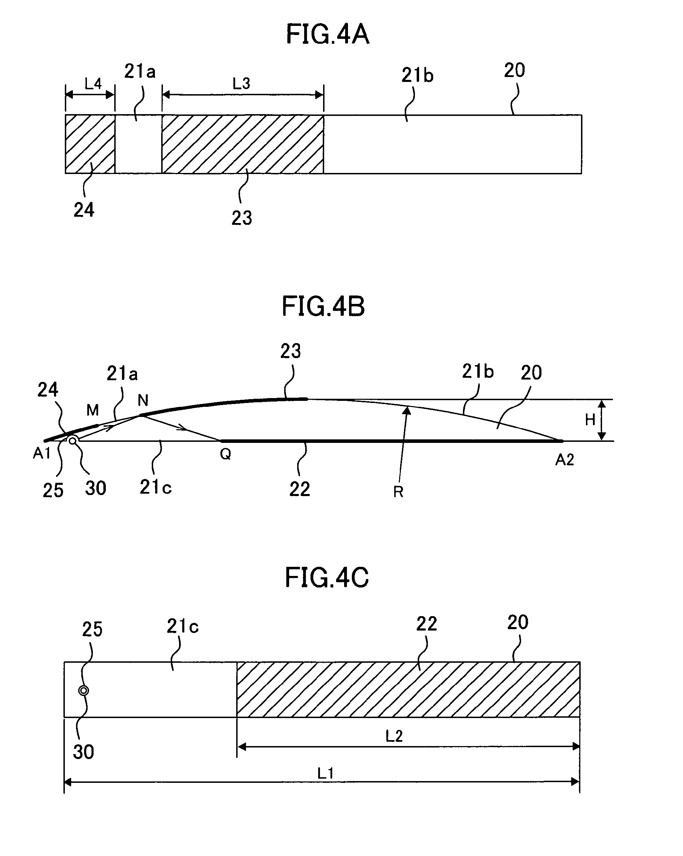

FIG. 3 is a perspective view of the light source section shown in FIG. 2. The orientation of each of the lenses 20 is laterally reversed between FIG. 3 and FIGS. 4A to 4B. The lenses 20 shown in FIG. 3 each internally having one of the LEDs 30 are arranged in three rows and three columns. Although the number of the LEDs 30 is small for the screen size, the brightness of the screen can be kept much more uniform than that of a comparable screen without the lenses 20. The interconnection substrate 40 shown in FIG. 3 measures, for example, 100 mm by 100 mm.

FIGS. 4A to 4C show the shape of each of the lenses 20 shown in FIG. 3. The orientation of the lens 20 shown in FIGS. 4A to 4C is laterally reversed from that of the lenses 20 shown in FIG. 3. FIG. 4B is a sectional view of the lens 20. FIG. 4A is a top plan view of the lens 20. FIG. 4C is a bottom plan view of the lens 20. The lens 20 shown in FIGS. 4A to 4C is cylindrically shaped with a predetermined curvature radius R. When the length L1 of the lens 20 is determined, the thickness H, shown in FIG. 4B, of the lens 20 is determined based on the predetermined curvature radius R. Referring to FIG. 4B, the length L1, thickness H and curvature radius of the lens 20 are, for example, 30 mm, 2.5 mm, and 48 mm, respectively.

As shown in FIG. 4B, the lens 20 has an end diffusion surface 24, a first top total reflection surface 21a, a top diffusion surface 23, and a second top total reflection surface 21b arranged from left to right in the mentioned order. A bottom diffusion surface 22 is formed in a predetermined area on the underside of the lens 20. The rest of the area on the underside of the lens 20 makes up a bottom total reflection surface 21c. In FIG. 4B, a concave portion 25 to accommodate an LED 30 is formed in a left side portion of the underside of the lens 20, i.e. in a portion of the bottom total reflection surface 21c.

Referring to FIG. 4A, the end diffusion surface 24 is formed in a top left-end portion of the lens 20, and the top diffusion surface 23 is formed in a top portion leftward of a middle of the lens 20. The portion on the left of the top diffusion surface 23 makes up the left total reflection surface 21. Referring to FIG. 4C, the concave portion 25 to accommodate an LED 30 is formed in a left side portion of the underside of the lens 20. The bottom diffusion surface 22 is formed to extend as long as the length L2 from the right end of the lens 20.

Referring to FIG. 4B, the light emitted from the LED 30 and reaching the end diffusion surface 24 formed on the top surface of the lens 20 is diffused there and outputted upward from the lens 20. Light emitted at low angles from the LED 30 reaches the first top total reflection surface 21a formed on the top surface of the lens 20 and is totally reflected. The lens 20 is made of an acrylic resin with a refractive index of 1.5, so that the critical angle for total reflection is 41.8 degrees. The first top total reflection surface 21a is formed to spread over a top surface area of the lens 20 where the light reaching from the LED 30 has an incident angle of 41.8 degrees or larger to be totally reflected.

The light reflected from the first top total reflection surface 21a formed on the top surface of the lens 20 is totally reflected to reach the bottom total reflection surface 21c formed on the underside of the lens 20 to be totally reflected again and reach the top surface of the lens 20 again. In this manner, the light emitted from the LED 30 and totally reflected from the top surface of the lens 20 is transmitted, by being totally reflected repeatedly inside the lens 20, toward an end A2 of the lens 20. If the lens 20 has total reflection surfaces 21 only, a part farther from the LED 30 becomes brighter inside the lens 20. The diffusion surfaces formed on the top and bottom surfaces of the lens 20 serve to prevent such a phenomenon and cause light to be outputted from the lens 20 with balanced brightness.

Namely, some of the light totally reflected from the top or bottom surface of the lens 20 reaches the bottom diffusion surface 22 or top diffusion surface 23 to be then upwardly outputted from the lens 20. The brightness of light outputted from the lens 20 can be controlled by adjusting the positions and ranges of the diffusion surfaces. Referring to FIG. 4B, the top surface portion between points M and N of the lens 20 makes up the first top total reflection surface 21a. The light reflected from the point N between the top diffusion surface 23 and the first top total reflection surface 21a reaches point Q on the underside of the lens 20.

On the underside of the lens 20 shown in FIG. 4B, the portion on the left, as seen in FIG. 4B, of the point Q makes up the bottom total reflection surface 21c and the portion on the right of the point Q makes up the bottom diffusion surface 22. The light reflected from the bottom total reflection surface 21 on the left of the point Q heads for the other end A2 of the lens 20. Therefore, the position of the point N on the left of the top diffusion surface 23 formed on the top surface of the lens 20 determines how much of the light emitted from the LED 30 disposed near the end A1 of the lens 20 is sent toward the other end A2.

On the top surface of the lens 20 shown in FIG. 4B, the portion on the right of the top diffusion surface 23 makes up the second top total reflection surface 21b. The light emitted from the LED 30 and reaching the right total reflection surface 21 forms an incident angle larger than the critical angle of 41.8 degrees, so that it is totally reflected to be then sent toward the end A2 of the lens 20. Much of the light diffused from the bottom diffusion surface 22 on the underside of the lens 20 is, however, outputted from the top surface of the lens 20 without being reflected from the second top total reflection surface 21b on the right of the top diffusion surface 23. The brightness uniformity of the light outputted from the lens 20 can therefore be controlled by adjusting the range of the right total reflection surface 21 formed closer to the end A2 than the top diffusion surface 23 of the lens 20.

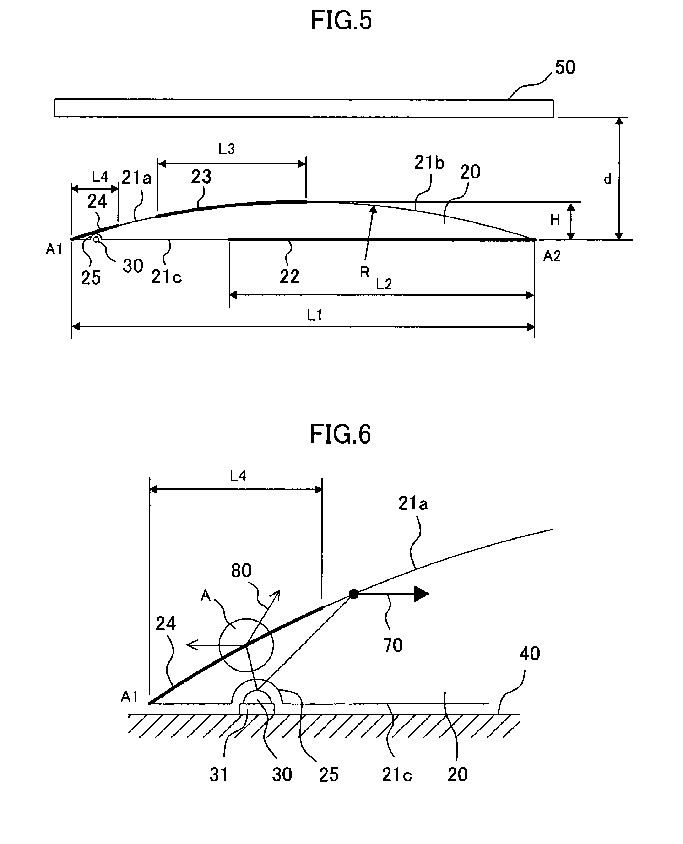

FIG. 5 is a sectional view showing example dimensions of the cylindrical lens 20 shown in FIGS. 4A to 4C and a positional relationship between the cylindrical lens 20 and a diffusion plate 50. In the example shown in FIG. 5, the distance between the lens 20 and the diffusion plate 50 is very small, for example, 8 mm. Using a backlight of such a configuration makes it possible to assemble a TV set with a very small depth, i.e. a so-called ultra-thin TV. The length L1, height H, and curvature radius R of the lens 20 shown in FIG. 5 are 30 mm, 2.5 mm, and 48 mm, respectively.

The end diffusion surface 24 formed on the top surface of the lens 20 extends a distance L4 from the left end A1 of the lens 20. In the present example, the L4 is 2.5 mm. The top diffusion surface 23 also formed on the top surface of the lens 20 extends a length L3 leftward, as seen in FIG. 5, from around the middle part of the top surface of the lens 20. In the present example, the L3 is 10 mm.

On the underside of the lens 20, the bottom diffusion surface 22 extends 20 mm from the right end A2. The bottom total reflection surface 21c formed on the left side of the bottom surface of the lens 20 has the concave portion 25 in which the LED 30 is accommodated. The LED 30 does not exceed 1 mm in any dimension. The LED 30 is disposed on the interconnection substrate 40 that is not shown in FIG. 5.

FIG. 6 is a sectional view of the portion around the end A1 where the LED 30 is disposed of the lens 20. As shown, the concave portion 25 is formed on the underside near the end A1 of the lens 20, and the LED 30 is accommodated in the concave portion 25. The LED 30 is mounted on the interconnection substrate 40 via an LED substrate 31. The lens 20 is disposed such that the concave portion 25 of the lens 20 covers the LED 30 mounted on the interconnection substrate 40.

When light emitted from the LED 30 reaches, for example, an area A included in the end diffusion surface 24 formed on the top surface of the lens 20, the light is diffused as indicated by arrows in FIG. 6. The incident angle formed by the light reaching the end diffusion surface 24 is smaller than the critical angle for total reflection. Therefore, if the end diffusion surface 24 is not present, the light reaching the surface portion is refracted and is then allowed to reach the diffusion plate 50 disposed above the lens 20 to make the brightness of the light outputted from the lens 20 uneven. The diffusion surface 24 that diffuses the light reaching it prevents the brightness of the light outputted from the lens 20 from becoming uneven.

The incident angle of the light reaching the first top total reflection surface 21a formed on the top surface of the lens 20 is larger than the critical angle for total reflection inside the lens 20, so that the light is reflected, at a higher degree of reflection than achievable by a general reflection surface, to be sent toward the other end A2 of the lens 20 thereby brightening the other end A2. The length L4 of the end diffusion surface 24 is affected by the refractive index of the resin material of which the lens 20 is formed. Namely, the length L4 of the end diffusion surface 24 is determined based on the refractive index of the lens material and according to the incident angle range for total reflection. In other words, the first top total reflection surface 21a is formed in an area where the light coming directly from the LED 30 is totally reflected.

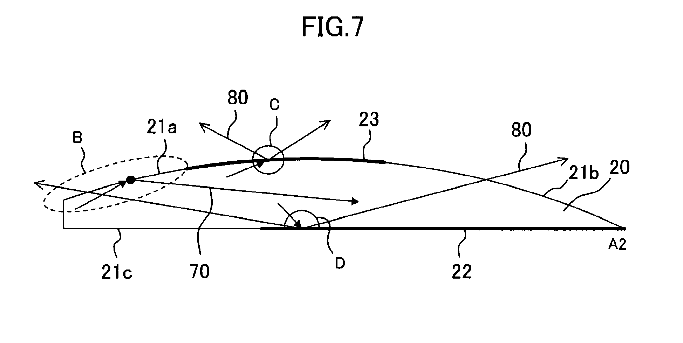

FIG. 7 shows how the light reaching the top surface portion to the right of the end diffusion surface 24 of the lens 20 subsequently advances. The light reaching the part inside the broken-line ellipse shown in FIG. 7 directly from the LED 30 is totally reflected and heads, as totally reflected light 70, for the other end A2 of the lens 20. The light reaching the top diffusion surface 23 directly from the LED 30 is outputted as diffused light 80 as indicated by arrows in FIG. 7 and reaches the diffusion plate 50, not shown, disposed above the lens 20.

The light reaching the bottom diffusion surface 22 after being reflected in the lens 20 is outputted, for example, as diffused light 80, as shown in FIG. 7, from the top surface of the lens 20 toward the diffusion plate 50, not shown. The light totally reflected from the top surface of the lens 20 also reaches the bottom diffusion surface 22 and then advances as diffused light 80 upwardly of the lens 20.

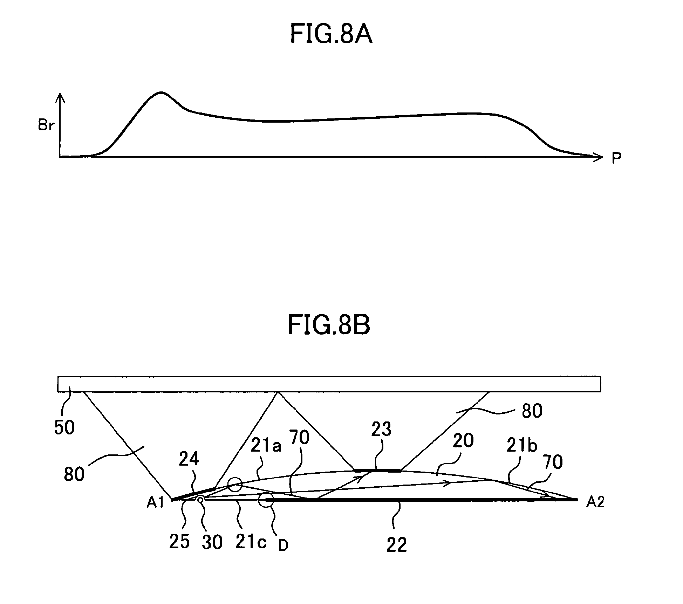

FIGS. 8A and 8B show, in more detail, how the light emitted by the LED 30 covered by the lens 20 as described above advances toward the diffusion plate 50 with FIG. 8A showing the brightness distribution on the underside of the diffusion plate 50 and FIG. 8B schematically showing the manner in which light emitted by the LED 30 is outputted from the lens 20 toward the diffusion plate 50. FIGS. 8A and 8B being for descriptive purposes do not necessarily coincide with FIG. 4 and other drawings as to, for example, diffusion surface sizes and positions.

Referring to FIG. 8B, the light emitted by the LED 30 accommodated in the concave portion 25 formed on the underside of the lens 20 and reaching the end diffusion surface 24 is outputted as diffused light 80 toward the diffusion plate 50 as shown in FIG. 6. The light emitted by the LED 30 and reaching the first top total reflection surface 21a on the top surface of the lens 20 is, on the other hand, totally reflected and then reaches, as totally reflected light 70, the bottom diffusion surface 22 formed on the underside of the lens 20.

Some of the light reaching the bottom diffusion surface 22 to be diffused there as diffused light 80 reaches, as indicated by an arrow, the top diffusion surface 23 on the top surface of the lens 20 to be further diffused. The light further diffused then reaches, as diffused light 80, the diffusion plate 50 as shown in FIG. 8B.

Referring to FIG. 8B, light emitted from the LED 30 at a low angle reaches the right total reflection surface 21 close to the other end A2 of the lens 20 without reaching either the end diffusion surface 24 or the top diffusion surface 23. The light reaching the second top total reflection surface 21b close to the other end A2 of the lens 20 directly from the LED 30 is totally reflected there and then reaches the bottom diffusion surface 22 on the underside of the lens 20. The light thus reaching the bottom diffusion surface 22 is diffused as diffused light 80 to be radiated from the top surface of the lens 20 toward the diffusion plate 50.

The graph shown in FIG. 8A shows the brightness distribution on the underside of the diffusion plate 50 disposed in the configuration shown in FIG. 8B. In the graph, the horizontal axis corresponds to the length of the diffusion plate 50 shown in FIG. 8B, and the vertical axis represents the brightness distribution on the underside of the diffusion plate 50. In FIG. 8A, the graph shows a gentle peak of brightness which approximately corresponds to the position of the LED 30 covered by the lens 20. The peak shown in FIG. 8A will be much steeper if the lens 20 shown in FIG. 8B is not provided.

The brightness graph shown in FIG. 8A is nearly flat except where the gentle peak is formed. The light emitted by the LED 30 and reaching particular areas on the top surface of the lens 20 is totally reflected to be then sent to parts farther from the LED 30 in the lens 20. It is therefore possible to secure a predetermined amount of input light even for parts spaced away from the LED 30 of the diffusion plate 50.

When an excessive amount of light emitted by the LED 30 is sent toward the other end A2 of the lens 20, the brightness around a central part of the lens 20 becomes inadequate. Not to allow such a condition to occur, the top diffusion surface 23 is formed in a central part of the top surface of the lens 20, thereby increasing the brightness of the central part. On the underside of the lens 20, the bottom diffusion surface 22 is spaced away from the LED 30 so as to prevent the brightness from becoming excessively high in areas near the LED 30. These arrangements result in a gentle peak of brightness as shown in FIG. 8A. Thus, it is possible to achieve a desired distribution of brightness by adjusting the positions and ranges of diffusion surfaces and the total reflection surfaces 21a, 21b and 21c.

The LEDs 30 used in the above embodiment are white light emitting diodes each paired with a lens 20. However, the LEDs 30 may be ones which emit three colors (RGB), respectively. When such LEDs are used, they may be arranged in sets of three LEDs to emit three colors (RGB), and each set of three LEDs may be provided with a lens 20. In such a case, the concave portion 25 formed on the underside of the lens 20 may be made large enough to accommodate a set of three LEDs, and a set of three LEDs to emit three colors (RGB) may be accommodated, closely to one another, in the concave portion 25. Alternatively, three concave portions 25 may be formed, closely to one another, on the underside of the lens 20 to accommodate three LEDs to emit three colors (RGB).

### Second Embodiment

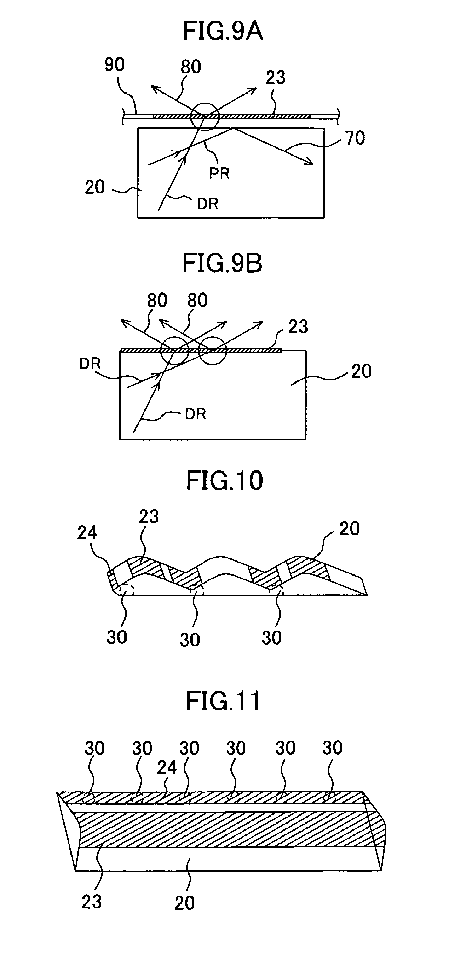

In the first embodiment, diffusion surfaces are formed directly on the surface of the lens 20. Instead of directly forming such diffusion surfaces on the lens 20, a diffusion sheet 90 for lens may be put on the lens 20 as shown in FIG. 9A. The top surface of the lens 20 shown in FIG. 9A makes up a total reflection surface 21 on which the diffusion sheet 90 is placed. The diffusion sheet 90 is a thin transparent resin sheet having diffusion surfaces formed on parts thereof.

The light incident on the top surface portion covered by the diffusion sheet 90 of the lens 20 is totally reflected as totally reflected light 70 or diffused as diffused light 80 depending on its incident angle. Namely, as shown in FIG. 9A, the light reaching the top surface of the lens 20 with an incident angle larger than the critical angle for total reflection is totally reflected as totally reflected light 70, whereas the light reaching the top surface of the lens 20 with an incident angle smaller than the critical angle reaches the diffusion sheet 90 through the top surface of the lens 20. The light reaching the diffusion sheet 90 is diffused as diffused light 80 to further advance to the diffusion plate 50, not shown, disposed upward of the lens 20.

FIG. 9B shows an example configuration in which a diffusion surface is formed directly on the lens surface as in the first embodiment. In the configuration as shown in FIG. 9B, the light reaching the diffusion surface is diffused, regardless of the incident angle, as diffused light 80 and heads for the diffusion plate 50, not shown, disposed upward of the lens 20. In the configuration of the second embodiment shown in FIG. 9A, the light emitted by the LED 30 can be transmitted farther in the lens 20. The configurations as shown in FIGS. 9A and 9B may, therefore, be used selectively depending on the brightness distribution required of the lens 20.

To form a diffusion surface whether directly on the top surface of the lens 20 or on the diffusion sheet 90, the same method may be used. A diffusion surface may be formed, for example, by printing white dots by ink-jet printing or by roughening a target surface using a fine cutting tool.

### Third Embodiment

In the first embodiment, the lenses 20 and LEDs 30 are arranged on a one-for-one basis. However, it is also possible to cover plural LEDs 30 with an integral-type lens. If an integral-type lens 20 is used for plural LEDs 30, the effects of the lens on each of the plural LEDs are the same as in cases where the lenses and LEDs are arranged on a one-for-one basis as in the first embodiment. Other types of lenses than the lens 20 used in the first embodiment will be described below.

FIG. 10 shows a first example of a lens different from the lens 20 used in the first embodiment. The lens shown in FIG. 10 integrally includes three consecutive parts each equivalent to the lens 20 used in the first embodiment. Namely, the effects on each of the three LEDs 30 of the integral type of lens 20 shown in FIG. 10 are the same as those described for the first embodiment. The lens 20 shown in FIG. 10 is equivalent to three lenses 20, as those shown in FIG. 3, integrated in the X direction.

FIG. 11 shows a second example of a lens different from the lens 20 used in the first embodiment. The lens 20 shown in FIG. 11 is equivalent to six lenses 20, as those shown in FIG. 3, integrated in the Y direction as seen in FIG. 3 and accommodates six LEDs 30. Namely, the lens 20 shown in FIG. 11 operates for the six LEDs 30, generating the same effects as those described for the first embodiment for each of the six LEDs 30. Although the integral type of lens 20 shown in FIG. 11 covers six LEDs, one to cover more LEDs (for example, 7 to 10 LEDs) may be used.

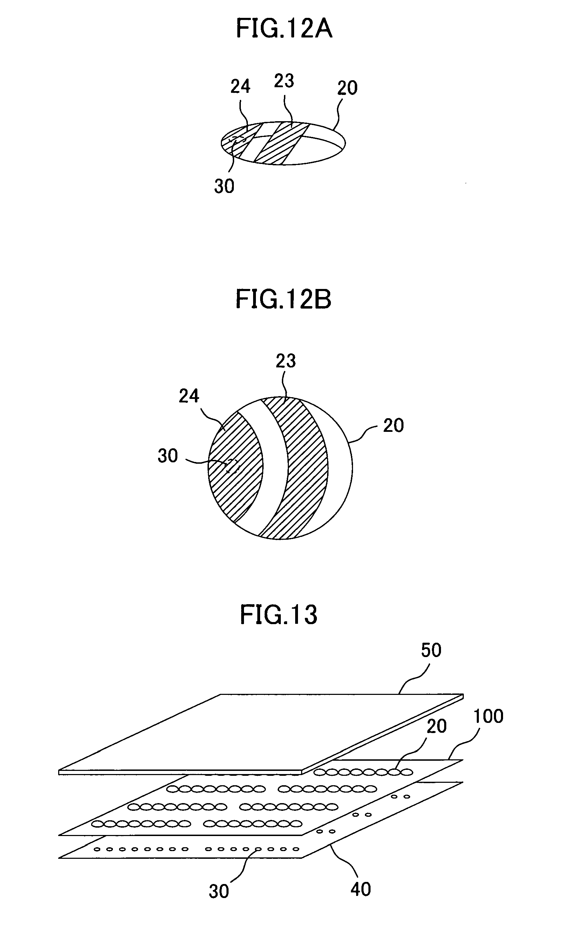

FIGS. 12A and 12B show a third example of a lens different from the lens 20 used in the first embodiment. The lens 20 shown in FIGS. 12A and 12B covers only one LED 30 to be the same as the lens 20 used in the first embodiment, and it generates effects similar to those described for the first embodiment. Since the lens 20 used in the first embodiment is a cylindrical lens, however, its lens effects are effective along one direction only, so that the brightness distribution may become uneven in other directions.

The lens 20 shown in FIG. 12 is not a cylindrical lens. It is almost spherical and designed to display lens effects two-dimensionally. The almost spherical lens 20 can two-dimensionally display lens effects similar to those described for the first embodiment by having total reflection surfaces and diffusion surfaces formed on the top surface or on the underside of the lens 20 as shown in FIGS. 12A and 12B.

Although the LED 30 used in the third embodiment is also a white light emitting diode, LEDs which emit three colors (RGB) may also be used similarly to the first embodiment that allows the use of such LEDs. For example, referring to FIGS. 10 and 11, each of the LEDs 30 may be replaced with a set of three LEDs to emit three colors (RGB).

### Fourth Embodiment

In the first embodiment, the LEDs 30 and the lenses 20 are arranged on a one-for-one basis. In the third embodiment, plural LEDs 30 are covered by one lens 20. In both embodiments, it is necessary to arrange plural lenses 20 for one backlight. This poses problems as to the number of components to be used and the assembly cost. In the fourth embodiment, a sheet on which plural lenses 20 are formed is used.

FIG. 13 is an exploded perspective view showing a backlight configuration according to the fourth embodiment. As shown in FIG. 13, many LEDs 30 are arranged in a matrix on the interconnection substrate 40. A lens sheet 100 on which lenses 20 are formed correspondingly to the LEDs 30 on the interconnection substrate 40 is disposed above the interconnection substrate 40. Each of the lenses 20 formed on the lens sheet 100 may be one similar to the lens 20 used in the first embodiment. In such a case, each of the LEDs 30 formed on the interconnection substrate 40 is accommodated in the concave portion 25 formed, as shown in FIG. 4, on the underside of each lens 20.

Namely, laying a lens sheet 100, on which as many lenses 20 as the number of the LEDs 30 arranged on the interconnection substrate 40 are formed, over the interconnection substrate 40 allows the lens sheet 100 to generate lens effects for each of the LEDs 30. Referring to FIG. 13, the diffusion plate 50 is disposed above the lens sheet 100 with a predetermined distance held between them.

The lens sheet 100 can be manufactured, for example, by press-forming plural lenses 20 on a sheet of organic resin or by injection-molding a resin into a lens sheet 100 having plural lenses 20.

Although the use of the lens sheet 100 has been described above based on the assumption that one lens sheet is used with one backlight, plural lens sheets may be used with one backlight, for example, when a large display screen is involved.

As described above, according to the explained embodiments, it is possible to widely spread the light emitted by an LED or a set of LEDs while making the brightness of the light uniform over a required area by using a lens having a diffusion surface and a reflection surface. According to the explained embodiments, therefore, the number of LEDs to be used with a direct-lighting backlight can be reduced to about ½ to ⅓ or even less compared with, for example, a case where the technology disclosed in Japanese Unexamined Patent Application Publication No. 2007-335182 is used. It is therefore possible to illuminate an LCD panel with high-brightness light with little brightness unevenness (i.e. with uniform brightness) using a relatively small number of LEDs. This makes it possible to realize a thin LCD panel which can display a bright image with little brightness unevenness using a relatively small number of LEDs at a low cost.

## Claims

1. A liquid crystal display (LCD) device having an LCD panel and a direct-lighting backlight,
wherein the backlight includes a substrate on which a plurality of LEDs are arranged and a lens disposed for each of the plurality of LEDs or for each set of a predetermined number of LEDs included in the plurality of LEDs, the lens having a bottom surface, a top surface, a first end, and a second end;
the top surface of the lens includes a first area which totally reflects light coming directly from each of the plurality of LEDs or each set of the predetermined number of LEDs and a second area which converts light coming directly from each of the plurality of LEDs or each set of the predetermined number of LEDs into diffused light;
the bottom surface of the lens includes a third area which converts incident light into diffused light and a fourth area which totally reflects specific light; and
each of the plurality of LEDs or each set of the predetermined number of LEDs are disposed under the lens to be closer, than a middle part of the lens, to the first end of the lens.

2. The LCD device according to claim 1, wherein the lens is a cylindrical lens having, as viewed sectionally, a linear bottom surface and an arc-like top surface.

3. The LCD device according to claim 1, wherein the top surface of the lens includes a third area and a fourth area which are alternately formed, the third area converting incident light into diffused light, the fourth area totally reflecting specific light.

4. An LCD device having an LCD panel and a direct-lighting backlight,
wherein the backlight includes a substrate on which a plurality of LEDs are arranged and an integral type lens which includes a plurality of lenses formed for the plurality of LEDs and which is disposed correspondingly to the substrate, each of the plurality of LEDs or each set of a predetermined number of LEDs included in the plurality of LEDs corresponding to one of the plurality of lenses;
the one of the plurality of lenses has a bottom surface, a top surface, a first end, and a second end;
the top surface of the one of the plurality of lenses includes a first area which totally reflects light coming directly from each of the plurality of LEDs or each set of the predetermined number of LEDs and a second area which converts light coming directly from each of the plurality of LEDs or each set of the predetermined number of LEDs into diffused light;
the bottom surface of the one of the plurality of lenses includes a third area which converts incident light into diffused light and a fourth area which totally reflects specific light; and
each of the plurality of LEDs or each set of the predetermined number of LEDs are disposed under the one of the plurality of lenses to be closer, than a middle part of the lens, to the first end of the lens.

5. An LCD device having an LCD panel and a direct-lighting backlight,
wherein the backlight includes a substrate on which a plurality of LEDs are arranged and a lens sheet which includes a plurality of lenses formed for the plurality of LEDs and which is disposed correspondingly to the substrate, each of the plurality of LEDs corresponding to one of the plurality of lenses;
the one of the plurality of lenses has a bottom surface, a top surface, a first end, and a second end;
the top surface of the one of the plurality of lenses includes a first area which totally reflects light coming directly from each of the plurality of LEDs and a second area which converts light coming directly from each of the plurality of LEDs into diffused light;
the bottom surface of the one of the plurality of lenses includes a third area which converts incident light into diffused light and a fourth area which totally reflects specific light; and
each of the plurality of LEDs is disposed under the one of the plurality of lenses to be closer, than a middle part of the lens, to the first end of the lens.

6. The LCD device according to claim 5, wherein the lens sheet corresponds to the backlight on a one-for-one basis.
